# EUROPEAN PATENT SPECIFICATION

(11) **EP 1 505 766 B1**
(45) Date of publication and mention of the grant of the patent: **05.10.2005**
(21) Application number: 04254430.4
(22) Date of filing: 23.07.2004
(51) Int. Cl.: H04L 12/18, H04M 3/56

(54) **Improved group communication system**
Verbessertes Gruppenkommunikationssystem
Système amélioré de communication de groupe

(30) Priority: 05.08.2003 US 634562
(43) Date of publication of application: 09.02.2005
(73) Proprietor: LUCENT TECHNOLOGIES INC., Murray Hill, New Jersey 07974-0636 (US)
(72) Inventor: Fernandez, Christopher L., Aurora, IL 60504 (US); Sand, Donna M., Redmond, WA 98052 (US)
(74) Representative: Watts, Christopher Malcolm Kelway

(56) References cited:
- WO-A-03/055188
- US-B1- 6 275 575
- US-B1- 6 501 739

## Description

### Technical Field

This invention relates to arrangements for communicating among groups of telecommunications users.

### Background of the Invention

In the field of telephony, full duplex conference connections are made possible through the use of a conference bridge to which all the conferees are connected. Conferences must be established through the offices of an operator. In the case of a meet me conference, all conferees call a common number which has been assigned to the conference bridge and can then be attached.

The service of speed dialing allows an individual telephone customer to dial two or three numbers in order to reach one of a group of pre-assigned telephone numbers.

Programmed speed dialing, available on wireless or intelligent land based stations, similarly allows a connection to be established in response to the operation of one or two keys, soft or hard. Both speed dialing and programmed speed dialing establish full duplex connections.

Half duplex services are currently commercially available.

International Patent Application WO 03/055188 (July 2003) discloses arrangements for providing data from a caller for a conference connection and establishing that connection immediately or at a time specified by the caller.

U.S. Patent 6,275,575 (issued August 2001) discloses arrangements for permitting a caller to specify a conference connection and to establish that connection in response to the specified data.

### Summary of the Invention

A method and apparatus according to the invention are as set out in the independent claims. Preferred forms are set out in the dependent claims.

Applicants have carefully studied all of these arrangements and have concluded that what is missing is an arrangement for connections among all available members of a predefined group in response to the operation of a single soft button for identifying the group. The group can be members of a family, a work group, or a temporary work team. In accordance with Applicants' invention, a server connected to a telecommunications network has access to or contains a database, previously provisioned, for identifying the members of each group defined for the network. The identification of each member is a telephone number or a web address. The connections can be made over the public switched telephone network or by voice over internet (VOIP) channels. In response to a request for a group connection, the server consults the database, identifies the members of the group, and transmits signals to the network requesting a connection to a media duplicator. The media duplicator receives digital signals representing voice signals from each of the connected parties and selects among or processes these signals for transmission to the various members of the group.

For full duplex connections, the selection algorithm can be a simple conference arrangement in which signals from all speakers are added and transmitted to everyone, or can be a transmission of signals from the loudest speaker to all conferees. For calls where speaker priority is a need, half duplex connections will be established using the selection algorithm based on priority, i.e., connect the highest priority speaker, possibly with arrangements for changing priority during the call); the speaker who has the floor optionally including facilities for requesting the floor and for queuing such requests; the facilities can include interrupt arrangements by priority or by operation of a soft or hard button.

In accordance with one feature of the invention, a record of the conference can be stored for any or some selected group of absent members.

### Brief Description of the Drawing(s)

FIG. 1 is a block diagram illustrating the operation of Applicants' invention; and
FIG. 2 is a flow diagram illustrating the operation of Applicants' invention.

### Detailed Description

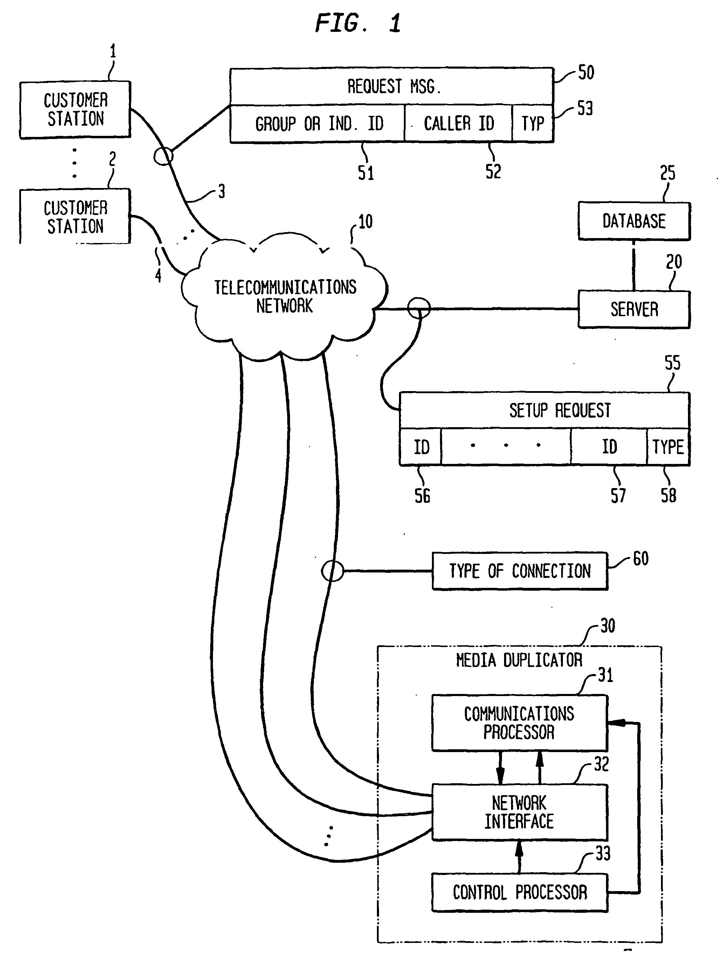

FIG. 1 is a block diagram illustrating Applicants' invention. A group of customer stations 1,...,2 are connected to a telecommunications network 10 by links 3,...,4. Also connected to the telecommunications network is a server 20 and its database 25 for interpreting a request containing the identity of a caller and the specified group or individual. Also shown is a media duplicator 30 for accepting communications inputs from all members of the group and transmitting outputs to all the members. The media duplicator, server, and database are shown as separate from the telecommunications network to clarify the operation of Applicants' invention. In an actual implementation, one or more of these units can be integrated into the telecommunications network.

A customer station makes a request by sending a request message 50 containing an identity of the group or individual 51 and the identity of the caller 52, and the type 53 of connection (full duplex or half duplex) requested. In alternate implementations, the identity of the caller can be inserted by the telecommunications network. The group or individual identity can be specified by the operation of a soft button, i.e., a click on a computer display. A telecommunications network 10 passes these messages to the server 20. The server 20 then consults database 25 to fetch the identities of the members of the group or of an individual (which may be known to the originator by a nickname). Server 20 then sends a conference setup request message to telecommunications network 10 including the identities of all of the members of the group 56,...,57 and the type of connection being requested 58. In response to this message 55 the network seizes a media duplicator 30 and establishes connections between the network interface 32 of the media duplicator and the various customer stations 1,...,2 of the group. Alternatively, the server contacts the media duplicator directly, without communication through the telecommunications network. The media duplicator contains a communications processor 31 for processing individual inputs to the network interface 32 in order to generate the individual outputs from that network interface. The media duplicator is controlled by a control processor 33 which receives information as to the type of connection conveyed in message 60 from the telecommunications network and uses this information to control the communications processor 31. During the call, individual messages concerning the type of connection can be sent by individual customer stations to the control processor.

The telecommunications network is a combination of the Internet, the public switched telephone network, the public wireless network, and available broadband networks. The connections which can be established can be simple voice connections or broadband connections. The customer stations can be connected to the network through land based telephone facilities using conventional speech transmission or voice over Internet protocol, or through wireless facilities.

The media duplicator network interface can establish full duplex or half duplex connections.

For either of the above arrangements, an interrupt arrangement can be superimposed wherein either by priority or by the operation of a soft button one member of the group can seize the floor.

Arrangements can also be made to record the group conference for any members who were unable to join the group.

The above discussion has been limited to group voice arrangements. For the case of data or video, the arrangement would generally be one in which the transmitter sends to all other members of the group, i.e., essentially a half duplex type of operation. However, the arrangements for seizing the floor and priority interrupts can be usefully applied to these arrangements to allow other members of the group to transmit their own data or video messages.

Another use of video group calling would be to support full duplex video group calling. The video input from each member would not mixed together, but each video input would be sent to each member of the group and be available in a split-screen view on the member's terminal. The user terminal equipment may also provide the option to display input from one or a subset of the inputs received for better viewing, rather than display of each group member's video input. The displayed video input(s) could be changed by the end user via control of their user equipment display.

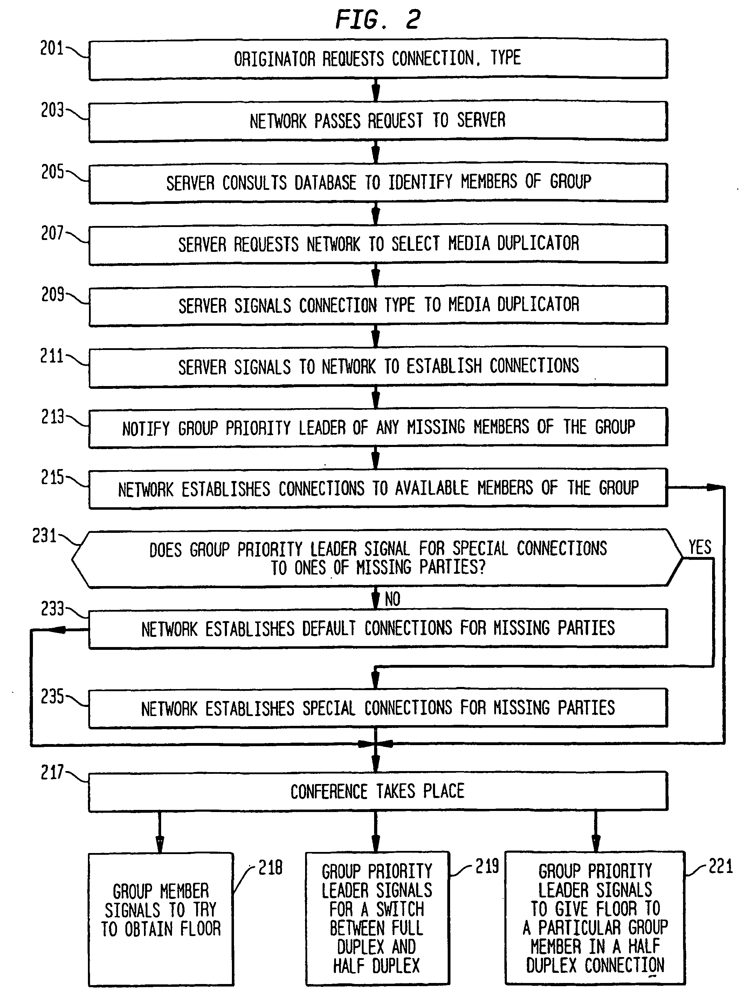

FIG. 2 is a flow diagram illustrating the operation of Applicants' invention. An originator requests a connection specifying the group identity and type of connection (full duplex or half duplex, data or voice) (action block 201). These messages are sent (action block 203) to the server and the server consults the database to identify members of the group (action block 205). The server then requests the network to select a media duplicator (action block 207). The server signals to the media duplicator about the type of connection being requested (action block 209). The server signals to the network to establish the connections between the media duplicator and the individual members of the group (action block 211). If the network discovers that any member of the group is not available (either busy or does not answer) then a group priority leader is notified (action block 213). The server normally contains a default attribute for the treatment of any member of the group that is missing (for example, simply to ignore this member, to connect a pre-specified alternate, or to make a connection to voice mail to record the results of the conference). The network establishes connections between the media duplicator and the available or default parties (action block 215).

Test 231 is used to determine if the group priority leader or the call originator signals for special connections to ones of the missing parties. If not, then the network establishes the default connections (action block 233) and continues to action block 217. If the group priority signals for special connections then the network establishes the special connections on behalf of the missing parties (action block 235) and processing continues with action block 217. In action block 217, the conference takes place. Outputs from action block 217 include for the case of a half duplex connection signals from individual group members to the media duplicator to record a request for an opportunity to seize the floor (action block 218). In response to this request, the media duplicator alters the internal connection to be responsive to such requests. In addition, the group priority leader can signal at any time for a switch between full duplex and half duplex conference (action block 219) or the group priority leader can signal for giving the floor to or taking the floor from any particular member of the group in a half duplex conference configuration (action block 221).

The above is one preferred embodiment of Applicants' invention. Other embodiments will be apparent to those of ordinary skill in the art without departing from the scope of the invention. The invention is only limited by the attached claims.

## Claims

1. A method of establishing a telecommunications group connection comprising the steps of:
provisioning a database (25) with identifications of members (1,...,2) of said telecommunications group, for later use in establishing said telecommunications group connection;
responsive to the operation (201) of an indicator, transmitting (203) a request message (50) to a telecommunications network (10) to establish a duplex group connection among the members of a group identified in said request message;
responsive to receipt of said request message, sending an identification (51) of said group to said database (205);
in said database, responsive to receipt of said identification of said group,translating (205) between the identification of the group and the identifications (1,...,2) of the members of the group;
sending said identifications to a server (20), for requesting a group connection;
responsive to requests from said server, in said telecommunications network, establishing (215)connections between the identified members (1,...,2) of said group and a media duplicator (30) for receiving input signals from members of the group and for transmitting group output signals to members of the group.

2. The method of claim 1 wherein said group connection is a voice group connection wherein members of the group can hear a plurality of other talking members.

3. The method of claim 1 wherein said group connection is a video group connection wherein members of the group can see a plurality of other members.

4. The method of claim 1 wherein said indicator is a soft button.

5. The method of claim 1 wherein the step of establishing connections comprises the step of:
transmitting a series of set-up requests from said server to said telecommunications network.

6. The method of claim 1 wherein said group connection is a half duplex connection.

7. The method of claim 1 wherein said group connection is a full duplex connection.

8. Apparatus for establishing a telecommunications group connection, comprising:
a telecommunications network (10) for establishing connections between terminals connected to said telecommunications network;
a database (25) for storing pre-provisioned identifications of members (1,...,2) of the telecommunications group;
a media duplicator (30) for receiving input signals from connected terminals and for transmitting group output signals to said connected terminals;
processor means(1), responsive to the operation of an indicator, operative for transmitting (203) a request message (50)to said telecommunications network (10);
said telecommunications network operative for transmitting (203) said request message (50) to said database, for requesting identifications of said members of said group;
said database (25) comprising means responsive to receipt of said request message and operative for translating between the identification (51) of the group and the identifications of the members of the group(1,...,2);
said database operative in response to said translating for transmitting a setup request message (55) to said telecommunications network;
said telecommunications network operative in response to receipt of said setup request message for establishing connections between members of said group and said media duplicator.

9. The apparatus of claim 8 wherein said group connection is a half duplex connection.

10. The apparatus of claim 8 wherein said group connection is a full duplex connection.

## Revendications

1. Procédé d'établissement d'une connexion de groupe de télécommunications, comprenant les étapes consistant à :
fournir une base de données (25) comprenant des identifications de membres (1, ..., 2) dudit groupe de télécommunications, en vue de son utilisation ultérieure dans l'établissement de ladite connexion de groupe de télécommunications ;
en réponse à l'activation (201) d'un indicateur, transmettre (203) un message de demande (50) à un réseau de télécommunications (10) pour établir une connexion de groupe duplex parmi les membres d'un groupe identifié dans ledit message de demande ;
en réponse à la réception dudit message de demande, envoyer une identification (51) dudit groupe à ladite base de données (205) ;
dans ladite base de données, en réponse à la réception de ladite identification dudit groupe, effectuer une conversion (205) entre l'identification du groupe et les identifications (1, ..., 2) des membres du groupe ;
envoyer lesdites identifications à un serveur (20) pour demander une connexion de groupe ;
en réponse à des demandes provenant dudit serveur, dans ledit réseau de télécommunications, établir (215) des connexions entre les membres identifiés (1, ..., 2) dudit groupe et un duplicateur de supports (30) pour recevoir des signaux d'entrée provenant de membres du groupe et pour transmettre des signaux de sortie de groupe à des membres du groupe.

2. Procédé selon la revendication 1, dans lequel ladite connexion de groupe est une connexion de groupe vocale dans laquelle des membres du groupe peuvent entendre une pluralité d'autres membres qui parlent.

3. Procédé selon la revendication 1, dans lequel ladite connexion de groupe est une connexion de groupe vidéo dans laquelle des membres du groupe peuvent voir une pluralité d'autres membres.

4. Procédé selon la revendication 1, dans lequel ledit indicateur est un bouton programmable.

5. Procédé selon la revendication 1, dans lequel l'étape consistant à établir des connexions comprend l'étape consistant à :
transmettre une série de demandes de mise en liaison dudit serveur audit réseau de télécommunications.

6. Procédé selon la revendication 1, dans lequel ladite connexion de groupe est une connexion semi-duplex.

7. Procédé selon la revendication 1, dans lequel ladite connexion de groupe est une connexion duplex.

8. Appareil pour établir une connexion de groupe de télécommunications, comprenant :
un réseau de télécommunications (10) pour établir des connexions entre des terminaux connectés audit réseau de télécommunications ;
une base de données (25) pour stocker des identifications préalablement fournies de membres (1, ..., 2) du groupe de télécommunications ;
un duplicateur de supports (30) pour recevoir des signaux d'entrée provenant de terminaux connectés et pour transmettre des signaux de sortie de groupe auxdits terminaux connectés ;
un moyen formant processeur (1), répondant à l'activation d'un indicateur, fonctionnant pour transmettre (203) un message de demande (50) audit réseau de télécommunications (10) ;
ledit réseau de télécommunications fonctionnant pour transmettre (203) ledit message de demande (50) à ladite base de données pour demander des identifications desdits membres dudit groupe ;
ladite base de données (25) comprenant un moyen répondant à la réception dudit message de demande et fonctionnant pour effectuer une conversion entre les identifications (51) du groupe et les identifications des membres du groupe (1, ..., 2) ;
ladite base de données fonctionnant en réponse à ladite conversion pour transmettre un message de demande de mise en liaison (55) audit réseau de télécommunications ;
ledit réseau de télécommunications fonctionnant en réponse à la réception dudit message de demande de mise en liaison pour établir des connexions entre des membres dudit groupe et ledit duplicateur de supports.

9. Appareil selon la revendication 8, dans lequel ladite connexion de groupe est une connexion semi-duplex.

10. Appareil selon la revendication 8, dans lequel ladite connexion de groupe est une connexion duplex.

## Patentansprüche

1. Verfahren zum Herstellen einer Telekommunikationsgruppenverbindung mit folgenden Schritten:
Bereitstellen von Identifikationen von Mitgliedern (1,...,2) der Telekommunikationsgruppe für eine Datenbank (25) zur späteren Verwendung bei der Herstellung der Telekommunikationsgruppenverbindung;
als Reaktion auf die Funktion (201) eines Anzeigers Übertragen (203) einer Anforderungsnachricht (50) zu einem Telekommunikationsnetz (10) zur Herstellung einer Duplex-Gruppenverbindung zwischen den Mitgliedern einer in der Anforderungsnachricht identifizierten Gruppe;
als Reaktion auf den Empfang der Antwortnachricht Senden einer Identifikation (51) der Gruppe zu der Datenbank (205);
in der Datenbank, als Reaktion auf den Empfang der Identifikation der Gruppe, Umwerten (205) zwischen der Identifikation der Gruppe und den Identifikationen (1,...,2) der Mitglieder der Gruppe;
Senden der Identifikationen zu einem Server (20) zum Anfordern einer Gruppenverbindung;
als Reaktion auf Anforderungen von dem Server, in dem Telekommunikationsnetz, Herstellen (215) von Verbindungen zwischen den identifizierten Mitgliedern (1,...,2) der Gruppe und einer Medienkopiervorrichtung (30) zum Empfangen von Eingangssignalen von Mitgliedern der Gruppe und zum Übertragen von Gruppenausgangssignalen zu Mitgliedern der Gruppe.

2. Verfahren nach Anspruch 1, wobei die Gruppenverbindung eine Sprachgruppenverbindung ist, wobei Mitglieder der Gruppe eine Mehrzahl anderer sprechender Mitglieder hören können.

3. Verfahren nach Anspruch 1, wobei die Gruppenverbindung eine Video-Gruppenverbindung ist, wobei Mitglieder der Gruppe eine Mehrzahl anderer Mitglieder sehen können.

4. Verfahren nach Anspruch 1, wobei der Anzeiger eine Soft-Taste ist.

5. verfahren nach Anspruch 1, wobei der Schritt des Herstellens von Verbindungen den Schritt des Übertragens einer Reihe von Aufbauanforderungen von dem Server zu dem Telekommunikationsnetz umfaßt.

6. Verfahren nach Anspruch 1, wobei die Gruppenverbindung eine Halbduplex-Verbindung ist.

7. Verfahren nach Anspruch 1, wobei die Gruppenverbindung eine Vollduplex-Verbindung ist.

8. Vorrichtung zur Herstellung einer Telekommunikationsgruppenverbindung, mit folgendem:
einem Telekommunikationsnetz (10) zum Herstellen von Verbindungen zwischen mit dem Telekommunikationsnetz verbundenen Endgeräten;
einer Datenbank (25) zum Speichern von im voraus bereitgestellten Identifikationen von Mitgliedern (1,...,2) der Telekommunikationsgruppe;
einer Medienkopiervorrichtung (30) zum Empfangen von Eingangssignalen von angeschlossenen Endgeräten und zum Übertragen von Gruppenausgangssignalen zu den angeschlossenen Endgeräten;
auf die Funktion eines Anzeigers reagierenden Prozessormitteln (1) zum Übertragen (203) einer Anforderungsnachricht (50) zu dem Telekommunikationsnetz (10);
wobei das Telekommunikationsnetz die Übertragung (203) der Anforderungsnachricht (50) zur Datenbank zum Anfordern von Identifikationen der Mitglieder der Gruppe bewirkt;
wobei die Datenbank (25) auf den Empfang der Anforderungsnachricht reagierende Mittel zum Umwerten zwischen den Identifikationen (51) der Gruppe und den Identifikationen der Mitglieder der Gruppe (1,...,2) umfaßt;
wobei die Datenbank als Reaktion auf das Umwerten die Übertragung einer Aufbauanforderungsnachricht (55) zu dem Telekommunikationsnetz bewirkt;
wobei das Telekommunikationsnetz als Reaktion auf den Empfang der Aufbauanforderungsnachricht die Herstellung von Verbindungen zwischen Mitgliedern der Gruppe und der Medienkopiervorrichtung bewirkt.

9. Vorrichtung nach Anspruch 8, wobei die Gruppenverbindung eine Halbduplex-Verbindung ist.

10. Vorrichtung nach Anspruch 8, wobei die Gruppenverbindung eine Vollduplex-Verbindung ist.
